(19) Europäisches Patentamt / European Patent Office / Office européen des brevets

(11) **EP 4 180 996 A1**

(12) **EUROPEAN PATENT APPLICATION**
published in accordance with Art. 153(4) EPC

(43) Date of publication:
**17.05.2023 Bulletin 2023/20**

(21) Application number: **21837272.0**

(22) Date of filing: **12.06.2021**

(51) International Patent Classification (IPC):
**G06F 17/16** (2006.01)

(52) Cooperative Patent Classification (CPC):
**G06F 16/27; G06F 17/16**

(86) International application number:
**PCT/CN2021/099891**

(87) International publication number:
**WO 2022/007597 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.07.2020 CN 202010653743**

(71) Applicant: **Huawei Technologies Co., Ltd.**
**Shenzhen, Guangdong 518129 (CN)**

(72) Inventors:
• **LI, Tao**
  **Shenzhen, Guangdong 518129 (CN)**
• **LU, Tingyu**
  **Shenzhen, Guangdong 518129 (CN)**
• **CUI, Baolong**
  **Shenzhen, Guangdong 518129 (CN)**
• **YU, Licheng**
  **Shenzhen, Guangdong 518129 (CN)**
• **LIU, Haocheng**
  **Shenzhen, Guangdong 518129 (CN)**
• **LIN, Weibin**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **MATRIX OPERATION METHOD AND ACCELERATOR**

(57) A matrix operation method is provided, applied to an accelerator configured to perform a matrix operation. A matrix operation accelerator (100) respectively stores, in response to a received matrix operation instruction, subsets of a first matrix and subsets of a second matrix in a first storage space and a second storage space of a memory (120); stores, in a third storage space of the memory (120), subsets obtained after the subsets of the first matrix are multiplied by the subsets of the second matrix; and performs matrix operations on the subsets of the first matrix and the subsets of the second matrix based on the matrix operation instruction, to obtain matrix operation results. The dedicated matrix operation accelerator (100) is used to perform a matrix operation, so that a large-scale matrix operation can be completed in relatively short time, thereby offloading a matrix operation burden of a processor. Therefore, the matrix operation is no longer subject to a resource of a register in the processor and a computing capability of the processor. This effectively improves matrix operation efficiency.

FIG. 3A

**(Cont. next page)**

CONT. FROM FIG. 3A

CONT. FROM FIG. 3A

CONT. FROM FIG. 3A

CONT. FROM FIG. 3A

CONT. FROM FIG. 3A

CONT. FROM FIG. 3A

S307: Second object

S308: Perform matrix operations on the obtained first objects and the obtained second objects in parallel based on the second command

S308: Third object

S309: Determine whether the matrix operation on the first matrix and the second matrix is completed

No

S310: Third command

Yes

S311: Third matrix

S311: Third matrix

FIG. 3B

## Description

## TECHNICAL FIELD

This application relates to the computer field, and in particular, to a matrix operation method and accelerator.

## BACKGROUND

A matrix operation process is usually as follows: First, a processor loads, from a main memory (English: main memory) into a register, data on which a matrix operation is to be performed. Then, after performing the matrix operation on the data in the register, the processor obtains a matrix operation result. It can be learned that the matrix operation depends on a computing capability of the processor and a resource of the register in the processor. As information explodes, a scale of a matrix that participates in a matrix operation continuously increases. Because both a computing capability of a processor and a resource of a register in the processor are limited, an efficient matrix operation cannot be performed on a matrix at a relatively large scale. Therefore, how to provide an efficient matrix operation method becomes a technical problem to be urgently resolved.

## SUMMARY

This application provides a matrix operation method and accelerator, so that a matrix operation is not subject to a computing capability of a processor and a resource of a register in the processor, and therefore the matrix operation can be efficiently completed.

According to a first aspect, this application provides a matrix operation accelerator. The accelerator includes at least a control (CTRL) element, a memory, and a process element (process element, PE). The CTRL element is configured to receive a matrix operation instruction. The memory is configured to divide a storage area into a plurality of storage spaces, for example, a first storage space, a second storage block, and a third storage space. In this case, the memory is configured to store subsets of a first matrix in the first storage space, store subsets of a second matrix in the second storage space, and store a third matrix in the third storage space. The first matrix and the second matrix are two matrices that participate in a matrix operation and that are indicated by the matrix operation instruction, and the third matrix is a matrix including subsets obtained by multiplying the subsets of the first matrix by the subsets of the second matrix. The PE is responsible for performing matrix operations on the subsets of the first matrix in the first storage space and the subsets of the second matrix in the second storage space based on the matrix operation instruction, to obtain matrix operation results. In this way, a dedicated matrix operation accelerator is used to perform a matrix operation, so that a large-scale matrix operation can be completed in relatively short time, thereby offloading a matrix operation burden of a processor. Therefore, the matrix operation is no longer subject to a resource of a register in the processor and a computing capability of the processor. This effectively improves matrix operation efficiency.

In a possible implementation, the matrix operation accelerator includes at least one PE. As an example, when the matrix operation accelerator includes a plurality of PEs, the plurality of PEs may be separately configured to perform parallel matrix operations on the subsets of the first matrix in the first storage space and the subsets of the second matrix in the second storage space based on the matrix operation instruction, to obtain matrix operation results. In this way, the plurality of PEs perform matrix operations in parallel, so that a matrix operation speed no longer depends on a computing speed of a specific PE, and the matrix operation accelerator can quickly complete an operation even for a large-scale matrix, thereby greatly improving matrix operation efficiency.

In another possible implementation, the PE in the matrix operation accelerator may further update subsets of the third matrix in the third storage space based on the matrix operation results, where the subsets of the third matrix are obtained after matrix operations are performed on the subsets of the first matrix and the subsets of the second matrix. For example, it is assumed that a current subset of the third matrix in the third storage space is a subset C0 obtained after a subset A0 of a first matrix A is multiplied by a subset B0 of a second matrix B, and the PE multiplies the subset A0 of the first matrix A by a subset B1 of the second matrix B to obtain a matrix operation result C1. In this case, that the PE updates the subset of the third matrix in the third storage space based on the matrix operation result C1 may be specifically: accumulating C1 to the current subset C0 of the third matrix in the third storage space, where an updated subset of the third matrix in the third storage space is CO+C1. For another example, it is still assumed that a current subset of the third matrix in the third storage space is a subset C0 obtained after a subset A0 of a first matrix A is multiplied by a subset B0 of a second matrix B, and the PE multiplies the subset A0 of the first matrix A by a subset B1 of the second matrix B to obtain a matrix operation result C1, and calculates (CO+C1)=C2, denoted as a matrix operation result. In this case, that the PE updates the subset of the third matrix in the third storage space based on the matrix operation result C2 may be specifically: replacing the current subset C0 of the third matrix in the third storage space with C2, where an updated subset of the third matrix in the third storage space is C2. It may be understood that each PE may determine, based on an instruction of the CTRL element, subsets on which the PE unit is responsible for performing a matrix operation, and determine a position, in the third storage space, in which a matrix operation result (which may be an intermediate structure or a result finally included in the third matrix) obtained by the PE is stored.

In another possible implementation, after receiving the matrix operation instruction, the CTRL element in the matrix operation accelerator may further partition the first matrix and the second matrix based on the matrix operation instruction before the matrix operation is performed, to obtain a plurality of subsets of the first matrix and a plurality of subsets of the second matrix. The subset may include a specific quantity of elements in at least one consecutive row or column in the matrix. Each subset obtained by dividing a matrix needs to include consecutive elements in the matrix, any element in the matrix can be included in only one subset, and all elements in the matrix each need to be included in one subset. Subsets obtained by dividing the matrices by the CTRL element may be at a same scale or at different scales. However, it needs to be ensured that the subset of the first matrix and the subset of the second matrix that are obtained after the partitioning are multipliable, and the multipliable may specifically indicate that a quantity of columns included in the subset of the first matrix is the same as a quantity of rows included in the subset of the second matrix. As an example, a matrix may be divided into squares at a preset scale from left to right and from top to bottom, that is, obtained subsets of the matrix each are a square whose row quantity and column quantity are the same. In this way, matrices on which an operation is to be performed are partitioned by using the CTRL element, so that the matrix operation accelerator can perform block operations on subsets that are of the matrices and that are obtained after the partitioning. In addition, for a matrix operation accelerator of a plurality of PEs, a data basis is provided for implementing parallel matrix operations of the plurality of PEs, so that a fast and efficient matrix operation is possible.

In another possible implementation, the matrix operation accelerator may further include a direct memory access (direct memory access, DMA) unit. The DMA unit is configured to implement a data access operation performed when the matrix operation accelerator performs a matrix operation. Specifically, the DMA unit may obtain N first subsets of the first matrix and N second subsets of the second matrix from a shared storage space based on a partitioning result of the CTRL element, and respectively store the N first subsets and the N second subsets in the first storage space and the second storage space of the memory, where N is greater than or equal to a quantity of PEs included in the matrix operation accelerator, and N is a positive integer. The shared storage space is a storage space shared by a processor and the matrix operation accelerator, and the shared storage space may be, for example, a main memory. It should be noted that a value of N is usually related to a size of the memory in the matrix operation accelerator. If a space of the memory is large enough, N may be a quantity of subsets included in the first matrix or a quantity of subsets included in the second matrix. If a space of the memory is limited, N may be a multiple of the quantity of PEs included in the matrix operation accelerator. In this way, the matrix operation accelerator internally has an independent memory and has the DMA unit that can flexibly access data from the shared storage space, to reduce a quantity of times of data access between the matrix operation accelerator and the shared storage space, and reduce data access time, thereby improving matrix operation efficiency.

In another possible implementation, when the PE completes the matrix operations on the first subsets in the first storage space and the second subsets in the second storage space and does not complete matrix operations on all the subsets of the first matrix and all the subsets of the second matrix, as an example, the DMA unit may further obtain, from the shared storage space, a first subset that is of the first matrix and that does not participate in the matrix operation, and store, in the first storage space of the memory, the obtained first subset that is of the first matrix and that does not participate in the matrix operation. Alternatively, as another example, the DMA may further obtain, from the shared storage space, a second subset that is of the second matrix and that does not participate in the matrix operation, and store, in the second storage space of the memory, the obtained second subset that is of the second matrix and that does not participate in the matrix operation. In this way, it can be ensured that matrix operation data is loaded from the shared storage space into corresponding storage spaces of the memory in an orderly manner, so that orderly and effective block matrix operations are possible, thereby implementing an efficient matrix operation.

In another possible implementation, when the PE completes matrix operations on all the subsets of the first matrix and all the subsets of the second matrix, the DMA unit may further extract the third matrix currently stored in the third storage space from the memory, and store the third matrix in the shared storage space, where the third matrix is a matrix obtained by performing the matrix operation on the first matrix and the second matrix. In this way, a final matrix operation result can be output from the matrix operation accelerator to the shared storage space, so that the processor directly reads the final matrix operation result from the shared storage space.

As an example, when the matrix operation accelerator completes the matrix operation on the first matrix and the second matrix, the CTRL element may further send an interrupt instruction to the processor, where the interrupt instruction is used to notify the processor that the matrix operation on the first matrix and the second matrix is completed. In this way, the processor can obtain the final matrix operation result from the shared storage space, thereby providing a reliable data basis for subsequent computing, analysis, and the like.

In another possible implementation, the PE in the matrix operation accelerator may include, for example, a multiplier and an adder, where a first input end and a second input end of the multiplier are respectively connected to the first storage space and the second storage space of the memory, an output end of the multiplier is connected to a first input end of the adder, a second input end of the adder is connected to the third storage space of the memory, and an output end of the adder is connected to the third storage space of the memory. The multiplier may multiply elements in the subset of the first matrix by elements in the subset of the second matrix. The adder may add computing results of a plurality of multipliers to elements in current subsets of the third matrix in the third storage space, and update the elements in the subsets of the third matrix in the third storage space by using addition operation results. In this way, the subsets of the first matrix are multiplied by the subsets of the second matrix by using the foregoing structure of the PE, so that the matrix operation accelerator can accurately and efficiently complete the matrix operation.

In another possible implementation, the PE in the matrix operation accelerator may include, for example, a multiplier, an adder, and a register, where a first input end and a second input end of the multiplier are respectively connected to the first storage space and the second storage space of the memory, an output end of the multiplier and an output end of the register are both connected to an input end of the adder, an output end of the adder is connected to an input end of the register, and the output end of the adder is further connected to the third storage space of the memory. The register may store elements in current subsets of the third matrix in the third storage space. The multiplier may multiply elements in the subset of the first matrix by elements in the subset of the second matrix. The adder may add computing results of a plurality of multipliers to the elements in the current subsets of the third matrix in the register, and update the elements in the subsets of the third matrix in the third storage space by using addition operation results. In this way, the subsets of the first matrix are multiplied by the subsets of the second matrix by using the foregoing structure of the PE, so that the matrix operation accelerator can accurately and efficiently complete the matrix operation. It should be noted that the register in this implementation performs only a data cache function in the PE, to reduce a quantity of times the PE accesses data from the memory in a matrix operation process, thereby improving matrix operation processing efficiency.

It should be noted that a quantity of multipliers included in the PE is related to a scale of the subset of the first matrix and a scale of the subset of the second matrix. For example, if the scale of the subset of the first matrix and the scale of the subset of the second matrix are both 4×4, four multipliers may be disposed in the PE. For another example, if the scale of the subset of the first matrix and the scale of the subset of the second matrix are both 8×8, eight multipliers may be disposed in the PE.

According to a second aspect, this application further provides a matrix operation method. The method is applied to a matrix operation accelerator, the matrix operation accelerator is configured to perform a matrix operation, and the method may specifically include: in response to a received matrix operation instruction, respectively storing subsets of a first matrix and subsets of a second matrix in a first storage space and a second storage space of a memory, and storing, in a third storage space of the memory, subsets obtained after the subsets of the first matrix are multiplied by the subsets of the second matrix, where the matrix operation instruction is used to instruct to perform a matrix operation on the first matrix and the second matrix, and the third storage space is configured to store a third matrix formed based on the subsets obtained after the subsets of the first matrix are multiplied by the subsets of the second matrix; and then performing matrix operations on the subsets of the first matrix and the subsets of the second matrix based on the matrix operation instruction, to obtain matrix operation results.

In a possible implementation, the performing matrix operations on the subsets of the first matrix and the subsets of the second matrix based on the matrix operation instruction may include, for example, performing parallel matrix operations on the subsets of the first matrix and the subsets of the second matrix based on the matrix operation instruction.

In another possible implementation, the method provided in this application may further include: updating subsets of the third matrix in the third storage space based on the matrix operation results, where the subsets of the third matrix are obtained after matrix operations are performed on the subsets of the first matrix and the subsets of the second matrix.

In another possible implementation, the method provided in this embodiment of this application may further include: partitioning the first matrix and the second matrix based on the matrix operation instruction, to obtain a plurality of first subsets of the first matrix and a plurality of second subsets of the second matrix.

In another possible implementation, the method provided in this embodiment of this application may further include: obtaining N first subsets of the first matrix and N second subsets of the second matrix from a shared storage space based on a partitioning result, where N is greater than or equal to a quantity of process elements PEs included in the matrix operation accelerator, N is a positive integer, and the shared storage space is a storage space shared by a processor and the matrix operation accelerator. In this case, the respectively storing subsets of a first matrix and subsets of a second matrix in a first storage space and a second storage space of a memory may include, for example, storing the N first subsets in the first storage space of the memory; and storing the N second subsets in the second storage space of the memory.

In another possible implementation, when the matrix operations on the first subsets in the first storage space and the second subsets in the second storage space are completed and matrix operations on all the subsets of the first matrix and all the subsets of the second matrix are not completed, the method provided in this embodiment of this application may further include: obtaining, from the shared storage space, a first subset that is of the first matrix and that does not participate in the matrix operation, and storing, in the first storage space of the memory, the obtained first subset that is of the first matrix and that does not participate in the matrix operation.

In another possible implementation, when the matrix operations on the first subsets in the first storage space and the second subsets in the second storage space are completed and the matrix operations on all the subsets of the first matrix and all the subsets of the second matrix are not completed, the method provided in this embodiment of this application may further include: obtaining, from the shared storage space, a second subset that is of the second matrix and that does not participate in the matrix operation, and storing, in the second storage space of the memory, the obtained second subset that is of the second matrix and that does not participate in the matrix operation.

In another possible implementation, when matrix operations on all the subsets of the first matrix and all the subsets of the second matrix are completed, the method provided in this embodiment of this application may further include: extracting the third matrix currently stored in the third storage space from the memory, and storing the third matrix in the shared storage space, where the third matrix is a matrix obtained by performing the matrix operation on the first matrix and the second matrix.

In another possible implementation, the method provided in this embodiment of this application may further include: sending an interrupt instruction to the processor, where the interrupt instruction is used to notify that the matrix operation on the first matrix and the second matrix is completed.

In another possible implementation, the matrix operation accelerator implementing the method may include a process element PE, and the PE includes a multiplier and an adder, where a first input end and a second input end of the multiplier are respectively connected to the first storage space and the second storage space of the memory, an output end of the multiplier is connected to a first input end of the adder, a second input end of the adder is connected to the third storage space of the memory, and an output end of the adder is connected to the third storage space of the memory. In this case, a process of performing the matrix operation in the PE may include: the multiplier multiplies elements in the subset of the first matrix by elements in the subset of the second matrix; and the adder adds computing results of a plurality of multipliers to elements in current subsets of the third matrix in the third storage space, and updates the elements in the subsets of the third matrix in the third storage space by using addition operation results.

In another possible implementation, the matrix operation accelerator implementing the method may include a process element PE, and the PE includes a multiplier, an adder, and a register, where a first input end and a second input end of the multiplier are respectively connected to the first storage space and the second storage space of the memory, an output end of the multiplier and an output end of the register are both connected to an input end of the adder, an output end of the adder is connected to an input end of the register, and the output end of the adder is further connected to the third storage space of the memory. In this case, a process of performing the matrix operation in the PE may include: the register stores elements in current subsets of the third matrix in the third storage space; the multiplier multiplies elements in the subset of the first matrix by elements in the subset of the second matrix; and the adder correspondingly adds computing results of a plurality of multipliers to the elements in the current subsets of the third matrix in the third storage space, and updates the elements in the subsets of the third matrix in the third storage space by using addition operation results.

In another possible implementation, a quantity of multipliers included in the PE is related to a scale of the subset of the first matrix and a scale of the subset of the second matrix.

It should be noted that the method provided in the second aspect is implemented by the matrix operation accelerator provided in the first aspect. For all related descriptions and achieved effects of the various possible implementations of the method, refer to the corresponding descriptions in the foregoing first aspect.

According to a third aspect, this application further provides a matrix operation apparatus. The apparatus includes modules configured to perform the matrix operation method in any one of the second aspect or the possible implementations of the second aspect.

According to a fourth aspect, this application further provides a matrix operation device. The matrix operation device includes a processor and a memory. The memory is configured to store computer instructions. The processor is configured to perform, based on the computer instructions, the operation steps of the matrix operation method in any one of the second aspect or the possible implementations of the second aspect.

According to a fifth aspect, this application further provides a device. The device includes a processor, a shared storage space, and the matrix operation accelerator provided in any one of the first aspect or the possible implementations of the first aspect, and the processor and the matrix operation accelerator share the shared storage space. The processor is configured to send a matrix operation instruction to the matrix operation accelerator. The matrix operation accelerator is configured to perform the method provided in any one of the second aspect or the possible implementations of the second aspect on matrices in the shared storage space based on the matrix operation instruction, to implement a matrix operation.

According to a sixth aspect, this application provides a computer-readable storage medium. The computer-readable storage medium stores instructions. When the instructions run on a computer, the computer is enabled to perform the operation steps of the method in the foregoing aspects.

According to a seventh aspect, this application provides a computer program product including instructions. When the computer program product runs on a computer, the computer is enabled to perform the operation steps of the method in the foregoing aspects.

In this application, the implementations provided in the foregoing aspects can be further combined to provide more implementations.

**BRIEF DESCRIPTION OF DRAWINGS**

FIG. 1 is a schematic diagram of a logical architecture of a system 10 applicable to a matrix operation according to this application;

FIG. 2 is a schematic diagram of a logical architecture of computing modules involved in one time of multiply-accumulate process performed by a PE 131 according to this application;

FIG. 3A and FIG. 3B are an interaction flowchart of a matrix operation method according to this application;

FIG. 4 is a schematic diagram in which each PE performs one time of block multiplication operation according to this application;

FIG. 5 is a schematic diagram of a structure of a matrix operation apparatus according to this application; and

FIG. 6 is a schematic diagram of a structure of a matrix operation device according to this application.

**DESCRIPTION OF EMBODIMENTS**

The following describes technical solutions in embodiments of this application with reference to the accompanying drawings in embodiments of this application.

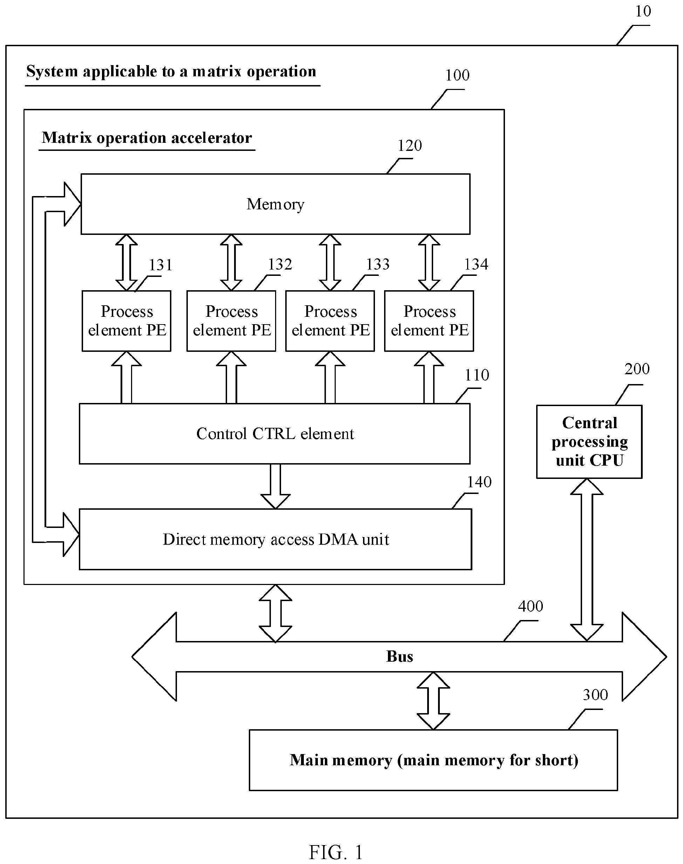

FIG. 1 is a schematic diagram of a logical architecture of a system 10 applicable to a matrix operation according to this application. As shown in FIG. 1, the system 10 includes a matrix operation accelerator 100, a processor 200, a shared storage space 300, and a bus 400. The matrix operation accelerator 100 and the processor 200 share a storage space in a main memory 300 by using the bus 400. The system 10 may be specifically a device that has a matrix operation function. For example, the system 10 is a computing device, and may be specifically a server. The matrix operation accelerator 100 and the processor 200 may be specifically two independent chips, or may be two modules integrated into one chip. This is not limited in this application. It should be noted that the processor 200 may be, for example, a central processing unit (central processing unit, CPU), a field-programmable gate array (field-programmable gate array, FPGA), an application-specific integrated circuit (application-specific integrated circuit, ASIC), or a graphics processing unit (graphics processing unit, GPU). This application provides descriptions by using an example in which the processor 200 is a CPU 200. It should be noted that the shared storage space 300 may be, for example, a main memory or any other storage space that can be shared by the processor 200 and the matrix operation accelerator 100. This application provides descriptions by using an example in which the shared storage space 300 is the main memory 300.

The matrix operation is a process of performing an operation on at least two matrices to obtain a result matrix. As a core problem in the scientific computing field, the matrix operation is widely used in scientific computing such as large-scale scientific computing, large-scale engineering computing, and numerical simulation. To achieve more efficient scientific computing, the matrix operation is usually optimized as an efficient and well-portable linear algebra package. In the scientific computing field, matrix operations mainly include matrix multiplication, matrix exponentiation, matrix division, and the like, and most of the matrix operations can be converted into matrix multiplication. Therefore, a program corresponding to the matrix multiplication may be considered as a core of a linear algebra package. For example, as a common linear algebra package, basic linear algebra subprograms (basic linear algebra subprograms, BLAS) include a large quantity of written programs related to matrix operations, but a program corresponding to general matrix multiplication (general matrix multiplication, GEMM) is a core of the BLAS.

The matrix multiplication is described by using an example in which a matrix A is multiplied by a matrix B to obtain a matrix C. A condition under which the matrix A can be multiplied by the matrix B is that a quantity of columns included in the matrix A is the same as a quantity of rows included in the matrix B. Each element in the matrix C is obtained after elements in a specific row of the matrix A are correspondingly multiplied by elements in a specific column of the matrix B and products are accumulated. For example, a $j^{th}$ element in an $i^{th}$ row of the matrix C is $$c_{ij} = \sum_{k=1}^{N} a_{ik} b_{kj}$$ , where N is the quantity of columns included in the matrix A, N is also the quantity of rows included in the matrix B, $a_{ik}$ is a $k^{th}$ element in an $i^{th}$ row of the matrix A, and $b_{kj}$ is a $j^{th}$ element in a $k^{th}$ row of the matrix B. In the following, a process of calculating one element in the matrix C is referred to as one time of multiply-accumulate process for short.

It should be noted that, in a specific implementation process, it may be determined, based on scales of two matrices on which a matrix operation is to be performed, whether to perform only a matrix multiplication operation or perform a multiply-accumulate operation.

In FIG. 1, the matrix operation accelerator 100 is configured to: receive a matrix operation instruction sent by the CPU 200, and perform, based on the matrix operation instruction, a matrix operation on matrices that are stored in the main memory 300 and on which an operation is to be performed. Refer to FIG. 1. The matrix operation accelerator 100 includes a control (control, CTRL) element 110, a memory 120, a process element (process element, PE) 131, a PE 132, a PE 133, and a PE 134. In addition, the matrix operation accelerator 100 further includes a direct memory access (direct memory access, DMA) unit 140. The CTRL element 110 is configured to: receive a matrix operation instruction sent by the CPU 200, perform, based on the matrix operation instruction, a partitioning operation on a first matrix and a second matrix on which a matrix operation is to be performed, and send an instruction to the DMA unit 140 based on a partitioning result to instruct the DMA unit 140 to perform a data access operation. The DMA unit 140 is configured to obtain subsets of the first matrix from the main memory 300 and store the subsets of the first matrix in a first storage space of the memory 120 based on the instruction of the CTRL element 110. The CTRL element 110 is further configured to send an operation instruction to the PEs. The plurality of PEs each are configured to respectively obtain a subset of the first matrix and a subset of the second matrix from the first storage space and a second storage space based on the operation instruction sent by the CTRL element 110, perform a matrix operation on the subset of the first matrix and the subset of the second matrix to obtain a subset of a third matrix, and store the subset of the third matrix in a corresponding position in a third storage space. In this way, after matrix operations on all the subsets of the first matrix and all the subsets of the second matrix are completed, the DMA unit 140 is further configured to read the third matrix from the third storage space of the memory 120 and store the third matrix in the main memory 300. The plurality of PEs are all connected to the memory 120, and the plurality of PEs are all controlled by the CTRL element 110.

Matrix multiplication in which matrix A × matrix B = matrix C is used as an example. It is assumed that the matrix A is a 16×4 matrix, and the matrix B is a 4×16 matrix. In this case, the matrix A and the matrix B may be partitioned. A specific partitioning manner may be as follows: For the matrix A, a matrix including elements from the zeroth row to the third row is denoted as a subset A0, a matrix including elements from the fourth row to the seventh row is denoted as a subset A1, a matrix including elements from the eighth row to the eleventh row is denoted as a subset A2, and a matrix including elements from the twelfth row to the fifteenth row is denoted as a subset A3. Likewise, for the matrix B, a matrix including elements from the zeroth column to the third column

umn is denoted as a subset B0, a matrix including elements from the fourth column to the seventh column is denoted as a subset B1, a matrix including elements from the eighth column to the eleventh column is denoted as a subset B2, and a matrix including elements from the twelfth column to the fifteenth column is denoted as a subset B3. In this way, the matrix A can be divided into four 4×4 subsets A0 to A3, and the matrix B can be divided into four 4×4 subsets B0 to B3. It should be noted that each subset obtained by dividing a matrix needs to include consecutive elements in the matrix, any element in the matrix is included in only one subset, and all elements in the matrix are included in subsets. In this case, the memory 120 may be divided into three storage spaces: a storage space A, a storage space B, and a storage space C. The storage space A is configured to store the subsets of the matrix A, the storage space B is configured to store the subsets of the matrix B, and the storage space C is configured to store the matrix C. In an initial state (when a matrix operation has not been performed yet), matrix C = 0, that is, the storage space C is empty. The storage space A and the storage space B each include four storage blocks, and the storage space C includes 4×4=16 storage blocks. Each storage block is configured to store one subset (which may also be referred to as an area, and each subset includes all elements in one area in an original matrix) of the matrix, each storage block includes 4×4=16 storage units, and each storage unit is configured to store one element of the matrix. The subset is a set of some elements of the matrix. For example, the matrix is divided into a plurality of squares.

The PE 131 is used as an example. A process in which the PE 131 performs a matrix operation includes the following steps: S11: Calculate C00=A0×B0. S12: Calculate C01=A0×B1. S13: Calculate C02=A0×B2. S14: Calculate C03=A0×B3.

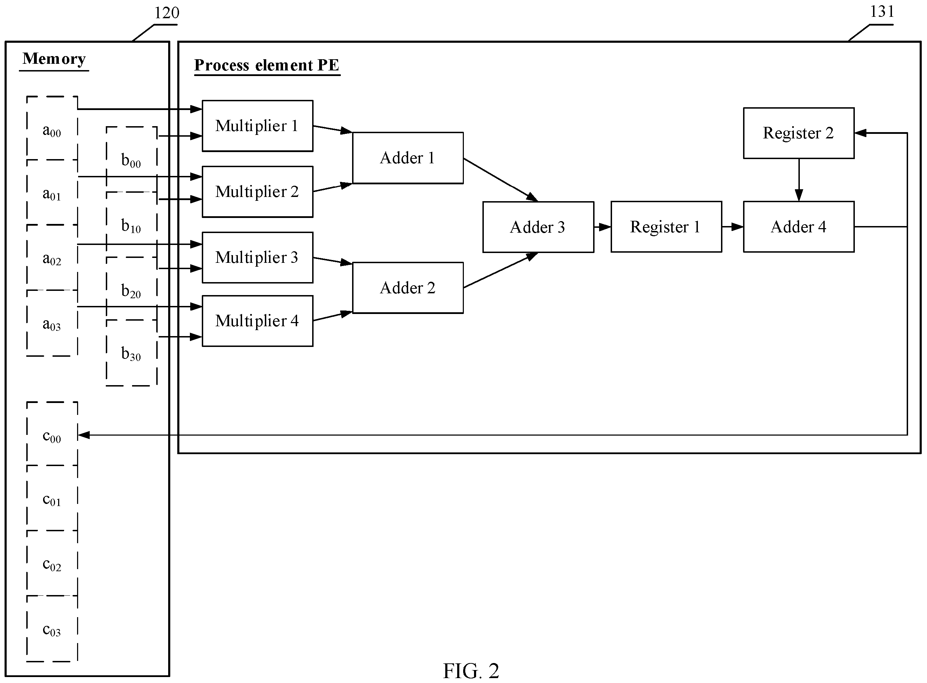

Each subset is at a 4×4 scale. Therefore, for each step in S11 to S14, the PE 131 needs to perform 16 times of multiply-accumulate processes. FIG. 2 is a schematic diagram of a logical architecture of computing modules involved in one time of multiply-accumulate process performed by the PE 131. As shown in FIG. 2, it is assumed that a multiply-accumulate process performed by the PE 131 is a process of obtaining the first element of the first row of C00 based on $\{a_{00}, a_{01}, a_{02}, a_{03}\}$ of the first row of A0 and $\{b_{00}, b_{10}, b_{20}, b_{30}\}$ of the first column of B0. In this case, computing modules involved in the multiply-accumulate process may include a multiplier 1, a multiplier 2, a multiplier 3, a multiplier 4, an adder 1, an adder 2, an adder 3, an adder 4, a register 1, and a register 2. Input ends of the multipliers 1 to 4 are respectively connected to corresponding storage units that are in the first storage block of the storage space A of the memory 120 and that store $a_{00}$, $a_{01}$, $a_{02}$, and $a_{03}$, and the other input ends of the multipliers 1 to 4 are respectively connected to corresponding storage units that are in the first storage block of the storage space B of the memory 120 and that store $b_{00}$, $b_{10}$, $b_{20}$, and $b_{30}$.

Output ends of the multiplier 1 and the multiplier 2 are connected to input ends of the adder 1, and output ends of the multiplier 3 and the multiplier 4 are connected to input ends of the adder 2. Output ends of the adder 1 and the adder 2 are connected to input ends of the adder 3. An output end of the adder 3 is connected to an input end of the register 1. An output end of the register 1 is connected to one input end of the adder 4. The other input end of the adder 4 is connected to an output end of the register 2. An output end of the adder 4 is connected to an input end of the register 2 and a corresponding storage unit that is in the first storage block of the storage space C of the memory 120 and that stores the first element of the first row of the subset C00. The multiplier and the storage space, the multiplier and the adder, the adders, the adder and the register, and the adder and the storage space all may be connected to each other by using a connection line used to conduct an electrical signal.

As an example, one time of multiply-accumulate process in a process in which the PE 131 performs S11 may include the following steps:

S111: The multiplier 1 respectively reads $a_{00}$ and $b_{00}$ from the storage space A and the storage space B, and calculates $a_{00} \times b_{00}$ to obtain $C_0$; the multiplier 2 respectively reads $a_{01}$ and $b_{10}$ from the storage space A and the storage space B, and calculates $a_{01} \times b_{10}$ to obtain $C_1$; the multiplier 3 respectively reads $a_{02}$ and $b_{20}$ from the storage space A and the storage space B, and calculates $a_{02} \times b_{20}$ to obtain $C_2$; and the multiplier 4 respectively reads $a_{03}$ and $b_{30}$ from the storage space A and the storage space B, and calculates $a_{03} \times b_{30}$ to obtain $C_3$.

S112: The adder 1 calculates $C_0 + C_1 = C_{12}$, and the adder 2 calculates $C_2 + C_3 = C_{23}$.

S113: The adder 3 calculates $C_{12} + C_{23} = C_{123}$, and stores $C_{123}$ in the register 1.

S114: The adder 4 respectively reads $C_{123}$ and $C_{current}$ ($C_{current} = 0$) from the register 1 and the register 2, and calculates $C_{123} + C_{current} = C_{123}$.

S115: The adder 4 refreshes $C_{current}$ in the register 2 with $C_{123}$, and stores $C_{123}$ in the corresponding storage unit that is in the first storage block of the storage space C and that stores the first element of the first row of the subset C00.

It should be noted that in the PE, the multiplier may be any circuit module having a multiplication function, and the adder may be any circuit module having an addition function. Regardless of a circuit module corresponding to the multiplier or a circuit module corresponding to the adder, an input end quantity and an output end quantity may be flexibly designed based on a requirement. As an example, the adders 1 to 3 may be replaced with one adder including four inputs and one output.

It should be noted that the register 1 and the register 2 perform only a data cache function in the PE 131, to improve processing efficiency of a multiply-accumulate process. In an actual scenario, in a case, the PE 131 may include only the register 2. In this case, the output end of the adder 3 is directly connected to the input end of the adder 4. In another case, the PE 131 may include no register. In this case, the output end of the adder 3 is directly connected to the input end of the adder 4, and the other input end of the adder 4 is connected to the corresponding storage unit that is in the first storage block of the storage space C and that stores the first element of the first row of the subset C00, to read current data of the storage unit. Alternatively, the PE 131 may include neither a register nor the adder 4. In this case, an input end of the adder 3 is connected to the corresponding storage unit that is in the first storage block of the storage space C and that stores the first element of the first row of the subset C00, to read current data of the storage unit, and the output end of the adder 3 is also connected to the storage unit, to refresh the current data of the storage unit with an accumulation result.

It should be understood that the memory 120 may be specifically a volatile memory or a nonvolatile memory. The nonvolatile memory may be a read-only memory (read-only memory, ROM), a programmable read-only memory (programmable ROM, PROM), a flash memory, or the like. The volatile memory may be a random access memory (random access memory, RAM) or the like. This is not limited in this application.

It should be noted that the system architecture shown in FIG. 1 is merely an example of a system architecture provided to better describe a matrix operation method provided in this application, and the logical architecture that is of the computing modules involved in one time of multiply-accumulate process performed by the PE 131 and that is shown in FIG. 2 is merely an example of a PE structure provided to better describe the matrix operation method provided in this application. These constitute no limitation on the embodiments of this application.

Based on the foregoing system architecture, this application provides a matrix operation method. A processor sends a matrix operation instruction to a matrix operation accelerator to instruct the matrix operation accelerator to perform a matrix operation on a first matrix and a second matrix. In this case, the matrix operation accelerator partitions the two matrices to obtain a plurality of first subsets of the first matrix and a plurality of second subsets of the second matrix, and correspondingly loads some or all first subsets and some or all second subsets from a main memory into a first storage space and a second storage space of a memory of the matrix operation accelerator; and performs matrix operations on the first subsets and the second subsets based on the matrix operation instruction, and stores, in a third storage space of the memory, matrix operation results corresponding to the first subsets and the second subsets, where final data in the third storage space is a result matrix obtained after a matrix operation is performed on the first matrix and the second matrix. It can be learned that in the method, a dedicated matrix operation accelerator is used to perform a matrix operation. In one aspect, the matrix operation accelerator internally has a memory, so that the matrix operation is no longer subject to a resource of a register in a processor, to reduce a quantity of times of data access between the matrix operation accelerator and a main memory, and reduce data access time, thereby improving matrix operation efficiency. In another aspect, the matrix operation accelerator performs computing on matrices that participate in an operation, so that the matrix operation is no longer subject to a computing capability of the processor, and a large-scale matrix operation can be completed in relatively short time, thereby implementing an efficient matrix operation.

In the embodiments of this application, the memory 120 is divided into a specific quantity of storage spaces, and each storage space is configured to store all or a part of data of one matrix in a matrix operation. One storage space is divided into a specific quantity of storage blocks, and each storage block is configured to include one subset obtained after matrix partitioning. One storage block is divided into a specific quantity of storage units, and each storage unit is configured to store one element of the matrix.

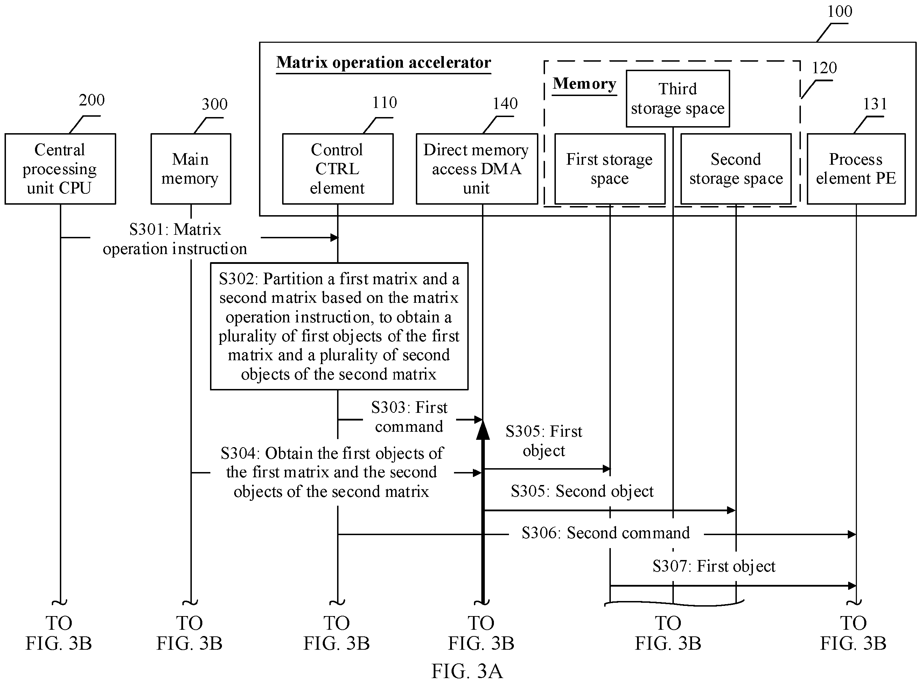

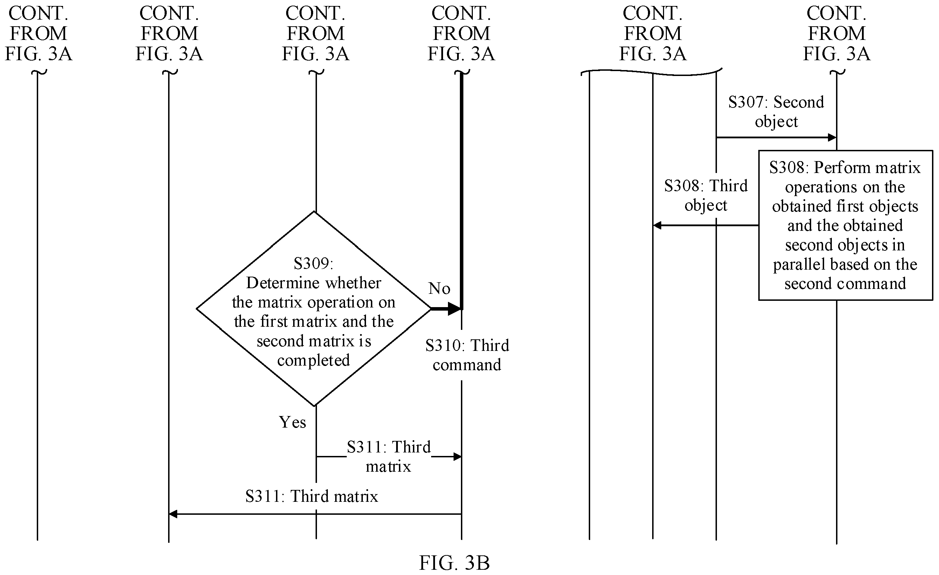

Next, the system 10 shown in FIG. 1 is used as an example to describe, in detail with reference to FIG. 3A and FIG. 3B, the matrix operation method provided in this application. As shown in FIG. 3A and FIG. 3B, the method includes the following steps.

S301: The CPU 200 sends a matrix operation instruction to the CTRL element 110 of the matrix operation accelerator 100, where the matrix operation instruction is used to instruct to perform a matrix operation on a first matrix and a second matrix.

During specific implementation, the matrix operation instruction in S301 may be specifically program code written by the CPU 200 into a program space of the main memory 300. The CTRL element 110 obtains the program code from the program space of the main memory 300 and decodes the program code, to obtain the matrix operation instruction.

The matrix operation instruction is used to instruct the matrix operation accelerator 100 to perform the matrix operation between the first matrix and the second matrix. To accurately implement the matrix operation, the matrix operation instruction may further indicate related information of the matrices that participate in the matrix operation, for example, a start address and a matrix scale of each matrix that participates in the matrix operation. As an example, the matrix operation instruction may specifically include instruction information 1, a start address 1 of the first matrix, a scale 1 of the first matrix, a start address 2 of the second matrix, and a scale 2 of the second matrix. The instruction information 1 is used to instruct to perform matrix multiplication on the first matrix and the second matrix, the scale 1 of the first matrix may be $16 \times 4$, the scale 2 of the second matrix may be $4 \times 16$, the start address 1 is a start address at which the first matrix (a matrix A) is stored in a data space of the main memory 300, and the start address 2 is a start address at which the second matrix (a matrix B) is stored in the data space of the main memory 300.

It should be noted that the main memory 300 includes the data space and the program space. The data space is configured to store an operand, and the program space is configured to store program code corresponding to various instructions. In the system 10, the main memory 300 may reserve a part of the program space for the matrix operation accelerator 100, and the CPU 200 may write, in the reserved program space, the program code corresponding to the matrix operation instruction, to instruct the matrix operation accelerator 100 to perform a corresponding matrix operation based on the matrix operation instruction.

S302: The CTRL element 110 partitions the first matrix and the second matrix based on the matrix operation instruction, to obtain a plurality of first subsets of the first matrix and a plurality of second subsets of the second matrix.

After obtaining the matrix operation instruction, the CTRL element 110 can determine that a matrix multiplication operation needs to be performed on the first matrix and the second matrix. To fully utilize a resource in the matrix operation accelerator 100 to implement an efficient matrix operation, the CTRL element 110 performs partitioning processing on the two matrices that participate in the matrix operation. Each block obtained after the partitioning processing is referred to as one subset, and each subset includes at least one element.

Performing partitioning processing on a matrix is specifically dividing a specific quantity of elements of at least one consecutive row or column of the matrix into one subset. Each subset obtained by dividing a matrix needs to include consecutive elements in the matrix, any element in the matrix can be included in only one subset, and all elements in the matrix each need to be included in one subset.

To divide the matrices, it needs to be further ensured that the subset of the first matrix and the subset of the second matrix that are obtained after the partitioning are multipliable, and the multipliable may specifically indicate that a quantity of columns included in the subset of the first matrix is the same as a quantity of rows included in the subset of the second matrix.

It should be noted that subsets obtained by dividing the matrices may be at a same scale or at different scales, provided that the subsets that are of the two matrices and that are obtained after the division are multipliable.

As an example, in an implementation in which a matrix is divided into a specific quantity of matrices at a same scale, it is possible that a remaining part of elements cannot constitute a subset at the scale. In this case, the remaining elements may be further divided into at least one subset at the scale through zero padding, and a process of performing the matrix operation is not affected by the zero padding operation.

This embodiment of this application provides descriptions by using an example in which the matrix is divided into squares (each subset is a square) and the subsets obtained by dividing the two matrices that participate in the matrix operation are at a same scale.

For example, if the scale of the first matrix is $16 \times 4$ and the scale of the second matrix is $4 \times 16$, a manner of partitioning the first matrix and the second matrix by the CTRL element 110 may include the following manners: In a manner 1, if the subset is a 1 1 square, 64 first subsets and 64 second subsets are obtained after partitioning, and each subset includes one element. In a manner 2, if a subset is a $2 \times 2$ square, 16 first subsets and 16 second subsets are obtained after partitioning, and each subset includes four consecutive elements. In a manner 3, if the subset is a $4 \times 4$ square, four first subsets and four second subsets are obtained after partitioning, and each subset includes 16 consecutive elements.

S303: The CTRL element 110 sends a first command to the DMA unit 140, where the first command is used to instruct the DMA unit 140 to obtain first subsets of the first matrix and second subsets of the second matrix.

S304: The DMA unit 140 obtains the first subsets of the first matrix and the second subsets of the second matrix from the main memory 300.

S305: The DMA unit 140 respectively stores the first subsets of the first matrix and the second subsets of the second matrix in a first storage space and a second storage space of the memory 120.

The CTRL element 110 may generate the first command and send the first command to the DMA unit 140 based on a partitioning result and a resource of the memory 120, to instruct the DMA unit 140 to move N first subsets and N second subsets from the main memory 300 to the memory 120, where N is an integer greater than or equal to a quantity of PEs included in the matrix operation accelerator 100, and corresponding to the system 10, $N \geq 4$. Usually, to perform reading and an operation in an orderly manner, a value of N is an integer multiple of the quantity of PEs included in the matrix operation accelerator 100. For example, it is assumed that the resource of the memory 120 is large enough to accommodate one $16 \times 4$ matrix, one $4 \times 16$ matrix, and one $16 \times 16$ matrix at a time. In this case, if the first subset and the second subset are at a 1 1 scale, N may be 4n (n is an integer in 1 to 16); if the first subset and the second subset are at a $2 \times 2$ scale, N may be 4m (m is an integer in 1 to 4); or if the first subset and the second subset are at a $4 \times 4$ scale, N may be 4.

The memory 120 divides a storage area of the memory 120 into a plurality of storage spaces, and each storage space is configured to store data of one matrix. For example, if the matrix operation is performed on the first matrix and the second matrix, the memory 120 divides the storage area into three storage spaces: the first storage space, the second storage space, and a third storage space. The first storage space is configured to store some or all first subsets of the first matrix that are moved by the DMA unit 140, the second storage space is configured to store some or all second subsets of the second matrix that are moved by the DMA unit 140, and the third storage space is configured to store an intermediate result or a final result (a third matrix) obtained after the PEs perform matrix operations. In an initial state (when no matrix operation is performed), the third storage space is empty.

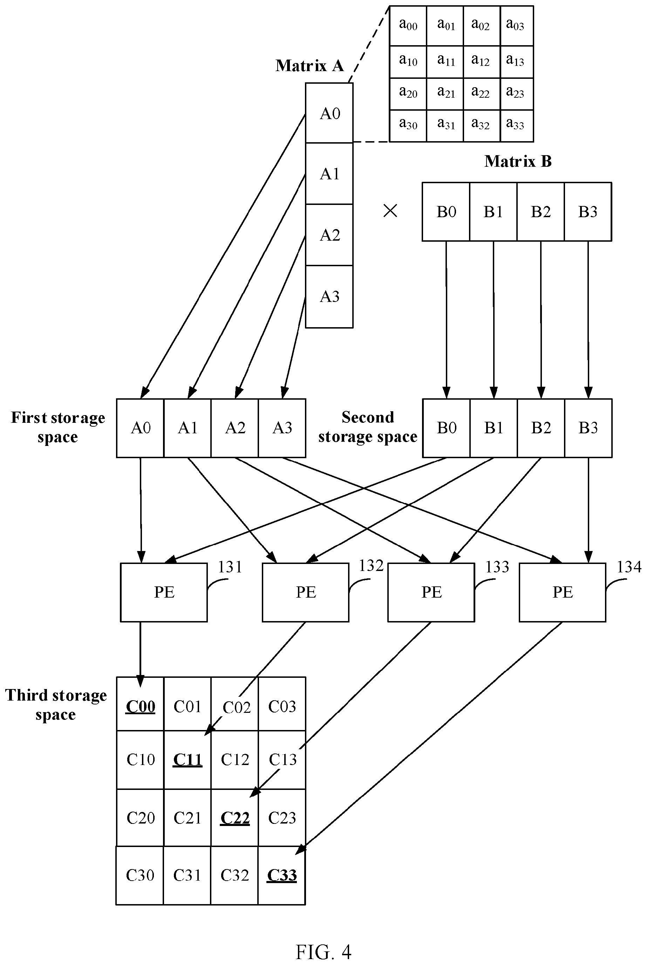

After receiving the first command, the DMA unit 140 may obtain all or some first subsets and all or some second subsets from the main memory 300 based on the first command, and respectively store the obtained first subsets and the obtained second subsets in the first storage space and the second storage space of the memory 120. For example, refer to FIG. 4. If a total of four first subsets A0 to A3 are obtained after the first matrix is partitioned, and a total of four second subsets B0 to B3 are obtained after the second matrix is partitioned, after S303 to S305, the first storage space of the memory 120 includes A0 to A3, and the second storage space includes B0 to B3. A0 to A3 and B0 to B3 each are a $4 \times 4$ square.

S306: The CTRL element 110 sends a second command to the PEs, where the second command is used to instruct the PEs to perform corresponding matrix operations.

S307: The PEs respectively obtain the first subsets of the first matrix and the second subsets of the second matrix from the first storage space and the second storage space of the memory based on the second command.

S308: The PEs perform matrix operations on the obtained first subsets and the obtained second subsets in parallel based on the second command to obtain third subsets, and store the third subsets in the third storage space of the memory 120.

Each PE may determine, based on the second command sent by the CTRL element 110, storage blocks on which the PE is responsible for performing a matrix multiplication operation, and perform a matrix multiplication operation on subsets in the determined storage blocks. It should be noted that, the matrix operations performed by the PEs may be parallel, and the PEs perform the parallel matrix operations in a same operation procedure. Therefore, FIG. 3A and FIG. 3B show only an interaction procedure of the PE 131 in the matrix operation, and the matrix operation of the PE 131 is used as an example to describe the parallel operations performed by the PEs in the matrix operations.

In S308, that the PEs perform matrix operations on the obtained first subsets and the obtained second subsets to obtain third subsets, and store the third subsets in the third storage space of the memory 120 may be performing block multiplication operations on the first subsets and the second subsets, and storing block multiplication results at corresponding positions in the third storage space as corresponding third subsets obtained after the matrix multiplication operations are performed on the first subsets and the second subsets. For example, after a matrix multiplication operation is performed on A0 and B0 respectively used as a first subset and a second subset, a third subset C00 is obtained, and C00 is stored in the first storage block of the third storage space. It should be noted that one time of block multiplication operation includes at least one time of multiply-accumulate operation. For example, if both the first subset and the second subset are 4×4 squares, one time of block multiplication operation includes 4×4=16 times of multiply-accumulate operations. For another example, if both the first subset and the second subset are 2×2 squares, one time of block multiplication operation includes 2×2=4 times of multiply-accumulate operations. For the multiply-accumulate operation performed by the PE, refer to the foregoing description corresponding to FIG. 2.

For example, refer to FIG. 4, the first storage space and the second storage space of the memory 120 each are divided into four storage blocks, and each storage block stores one subset. For example, the first storage space includes A0 to A3, and the second storage space includes B0 to B3. A storage block 0 to a storage block 3 of the first storage space respectively store A0 to A3, a storage block 4 to a storage block 7 of the second storage space respectively store B0 to B3, and a storage block 8 to a storage block 23 of the third storage space respectively store C00, CO1, C02, C03, C10, C11, C12, C13, C20, C21, C22, C23, C30, C31, C32, and C33. In an initial state, C00 to C33 are all equal to 0, that is, the storage block 8 to the storage block 23 are empty.

As an example, the PE 131 corresponds to the storage block 0 and the storage block 8 to the storage block 11, the PE 132 corresponds to the storage block 1 and the storage block 12 to the storage block 15, the PE 133 corresponds to the storage block 2 and the storage block 16 to the storage block 19, and the PE 134 corresponds to the storage block 3 and the storage block 20 to the storage block 23.

The PE 131 is used as an example. Because the second storage space includes B0 to B3, four times of block multiplication operation need to be performed, and each block multiplication operation corresponds to one storage block of the second storage space. A process in which the PE 131 performs a matrix operation may include the following steps:

S21: The PE 131 obtains A0 from the storage block 0, obtains B0 from the storage block 4, calculates A0×B0 to obtain C00, and stores C00 in the storage block 8 of the third storage space of the memory 120.

S22: The PE 131 obtains B1 from the storage block 5, calculates A0×B1 to obtain CO1, and stores C01 in the storage block 9 of the third storage space of the memory 120.

S23: The PE 131 obtains B2 from the storage block 6, calculates A0×B2 to obtain C02, and stores C02 in the storage block 10 of the third storage space of the memory 120.

S24: The PE 131 obtains B3 from the storage block 7, calculates A0×B3 to obtain C03, and stores C03 in the storage block 11 of the third storage space of the memory 120. Each step in S21 to S24 represents a process in which the PE 131 performs one time of block multiplication operation. FIG. 4 shows a process in which the PE1 131 performs a block multiplication operation corresponding to S21, a process in which the PE 132 obtains A1 from the storage block 1, obtains B1 from the storage block 5, calculates A1×B1 to obtain C11, and stores C11 in the storage block 13 of the third storage space of the memory 120, a process in which the PE 133 obtains A2 from the storage block 2, obtains B2 from the storage block 6, calculates A2×B2 to obtain C22, and stores C22 in the storage block 18 of the third storage space of the memory 120, and a process in which the PE 134 obtains A3 from the storage block 3, obtains B3 from the storage block 7, calculates A3×B3 to obtain C33, and stores C33 in the storage block 23 of the third storage space of the memory 120.

For S308, that the PEs perform the parallel matrix operations is specifically as follows: After obtaining a first subset from a corresponding storage block of the first storage space, each PE sequentially obtains the second subsets from the storage blocks of the second storage space; and after separately performing block multiplication operations by using the first subset and the obtained second subsets, stores obtained third subsets in storage blocks corresponding to the PE in the third storage space. A quantity of times each PE performs a block multiplication operation may be equal to a quantity of second subsets that participate in the matrix operations in S308. The third storage space stores a specific quantity of third subsets. For example, for the operation in which the matrix A is multiplied by the matrix B in the foregoing example, after S308 is performed, a quantity of third subsets is equal to a product of quantities of first subsets and second subsets on which parallel matrix operations are performed. For another example, it is assumed that for an operation in which the matrix B is multiplied by the matrix A, after S308 is performed, a quantity of third subsets is equal to 1, and each PE accumulates third subsets obtained by the PE through calculation to current data of the third storage space, to obtain a final matrix C that is four 4×4 squares.

It should be noted that, in a process in which the PEs perform the parallel matrix operations, an operation performed by each PE is an independent operation and is not affected by another PE, and a speed at which each PE performs a matrix operation does not affect another PE.

The parallel matrix operations are performed on different subsets of the two matrices by using the plurality of PEs, so that a matrix operation speed can be effectively improved.

S309: The CTRL element 110 determines whether the matrix operation on the first matrix and the second matrix is completed; and if no, performs the following S310; or if yes, performs S311.

S310: The CTRL element 110 sends a third command to the DMA unit 140, where the third command is used to instruct the DMA unit 140 to obtain an unloaded first subset of the first matrix or an unloaded second subset of the second matrix; and returns to perform S304.

S311: The CTRL element 110 writes the third matrix in the main memory 300 by using the DMA unit 140, where the third matrix is a result matrix obtained by performing the matrix operation on the first matrix and the second matrix.

After each time the foregoing S308 is performed, the CTRL element 110 determines whether there is still a first subset or a second subset that does not participate in the matrix operation; and if there is still a first subset or a second subset that does not participate in the matrix operation, determines that the matrix operation on the first matrix and the second matrix is not completed, and performs S310, to continue to perform an incomplete matrix operation process; or if determining that no first subset or second subset does not participate in a matrix operation, determines that the matrix operation on the first matrix and the second matrix is completed, and may perform the following S311, to write the third matrix in the main memory 300 by using the DMA unit 140. The third matrix is a result matrix obtained by performing the matrix operation on the first matrix and the second matrix.

In some possible implementations, when determining that the matrix operation on the first matrix and the second matrix is not completed, the CTRL element 110 sends the third command to the DMA unit 140 to instruct the DMA unit 140 to continue to obtain the unloaded first subset of the first matrix or the unloaded second subset of the second matrix from the main memory 300; and returns to perform S304 to S308, until the matrix operation is completed.

For example, it is assumed that the scale of the first matrix is $16 \times 8$, the scale of the second matrix is $8 \times 16$, and A0 to A7 and B0 to B7 are obtained after the two matrices are partitioned, where A0 to A3 are first subsets of the first column, A4 to A7 are first subsets of the second column, B0 to B3 are second subsets of the first row, and B4 to B7 are second subsets of the second row. In S304 to S308, parallel matrix operations are performed on the first subsets of the first column and the second subsets of the first row to obtain third subsets C00 to C33. After it is determined, in S309, that the matrix operation between the first matrix and the second matrix has not been completed yet, S310 and S304 to S308 may be performed three times, and obtained third subsets are accumulated to current corresponding storage blocks of the third storage space, to obtain new third subsets, where a set of all third subsets obtained after three times of accumulation is denoted as a third matrix.

For example, a process in which the PE 131 performs a matrix operation may specifically include the following steps:

S31: The DMA unit 140 moves the second subsets B4 to B7 in the main memory 300 to the second storage space based on the third command, and the CTRL element 110 sends a second command to the PEs, where the second command is used to instruct the PEs to perform corresponding matrix operations.

S32: The PE 131 obtains the second subsets B4 to B7 of the second matrix from the second storage space of the memory based on the second command.

S33: The PE 131 calculates A0$\times$B4 to obtain C00', and accumulates C00' to the storage block 8 of the third storage space; calculates A0$\times$B5 to obtain C01', and accumulates C01' to the storage block 9 of the third storage space; calculates A0$\times$B6 to obtain C02', and accumulates C02' to the storage block 10 of the third storage space; and calculates A0$\times$B7 to obtain C03', and accumulates C03' to the storage block 11 of the third storage space. Then, after determining in S309, the matrix operation process may further include the following steps:

S34: The DMA unit 140 moves the first subsets A4 to A7 in the main memory 300 to the first storage space based on the third command, and the CTRL element 110 sends a second command to the PEs, where the second command is used to instruct the PEs to perform corresponding matrix operations.

S35: The PE 131 obtains the first subsets A4 to A7 of the first matrix from the first storage space of the memory based on the second command.

S36: The PE 131 calculates A4$\times$B4 to obtain C00", and accumulates C00" to the storage block 8 of the third storage space; calculates A4$\times$B5 to obtain C01", and accumulates C01" to the storage block 9 of the third storage space; calculates A4$\times$B6 to obtain C02", and accumulates C02" to the storage block 10 of the third storage space; and calculates A4$\times$B7 to obtain C03", and accumulates C03" to the storage block 11 of the third storage space. Next, after determining in S309, the matrix operation process may further include the following steps:

S37: The DMA unit 140 moves the second subsets B0 to B3 in the main memory 300 to the second storage space based on the third command, and the CTRL element 110 sends a second command to the PEs, where the second command is used to instruct the PEs to perform corresponding matrix operations.

S38: The PE 131 obtains the second subsets B0 to B3 of the second matrix from the second storage space of the memory based on the second command.

S39: The PE 131 calculates A4$\times$B0 to obtain C00‴, and accumulates C00‴ to the storage block 8 of the third storage space; calculates A4$\times$B1 to obtain C01‴, and accumulates C01‴ to the storage block 9 of the third storage space; calculates A4$\times$B2 to obtain C02‴, and accumulates C02‴ to the storage block 10 of the third storage space; and calculates A4$\times$B3 to obtain C03‴, and accumulates C03‴ to the storage block 11 of the third storage space.

In this way, the PE 131 completes the matrix operation on the first matrix and the second matrix, to obtain four third subsets of the first row of the third matrix. The four third subsets are respectively denoted as C00, CO1, C02, and C03. $C00=A0\times B0+A0\times B4+A4\times B4+A4\times B0$, $C01=A0\times B1+A0\times B5+A4\times B5+A4\times B1$, $C02=A0\times B2+A0\times B6+A4\times B6+A4\times B2$, and $C03=A0\times B3+A0\times B7+A4\times B7+A4\times B3$.

It should be noted that processes in which the other PEs perform matrix operations are similar to the foregoing process in which the PE 131 performs the matrix operation. For related descriptions, refer to the descriptions of the foregoing process in which the PE 131 performs the matrix operation. Details are not described herein.

In some other possible implementations, when determining that the matrix operation on the first matrix and the second matrix is completed, the CTRL element 110 sends a fourth command to the DMA unit 140 to instruct the DMA unit 140 to store the obtained third matrix in the main memory 300. Specifically, after receiving the fourth command sent by the CTRL element 110, the DMA unit 140 obtains the third matrix from the third storage space of the memory 120, and stores the third matrix in the main memory 300. In addition, when determining that the matrix operation on the first matrix and the second matrix is completed, the CTRL element 110 may further send an interrupt instruction to the CPU 200, where the interrupt instruction is used to enable the CPU 200 to know that the matrix operation accelerator 100 has completed the operation that is on the first matrix and the second matrix and that is indicated by the matrix operation instruction.

It can be learned that, according to the method provided in this embodiment of this application, the matrix operation accelerator partitions, based on the instruction of the processor, the matrices in the main memory that participate in the operation, to obtain the plurality of subsets of the matrices that participate in the operation, respectively loads some or all subsets from the shared storage space into different storage spaces of the memory of the matrix operation accelerator, performs parallel matrix operations on the subsets in the different storage spaces based on the matrix operation instruction sent by the processor, and stores results obtained after the operations in another storage space. Final data in the another storage space is a result matrix obtained after the matrix operation is performed on the first matrix and the second matrix. In this way, a dedicated matrix operation accelerator is used to perform a matrix operation. The matrix operation accelerator internally has a memory, so that the matrix operation is no longer subject to a resource of a register in a processor, to reduce a quantity of times of data access between the matrix operation accelerator and a main memory, and reduce data access time, thereby improving matrix operation efficiency. In addition, the matrix operation accelerator performs parallel computing on matrices that participate in an operation, so that the matrix operation is no longer subject to a computing capability of the processor, and a large-scale matrix operation can be completed in relatively short time, thereby implementing an efficient matrix operation.

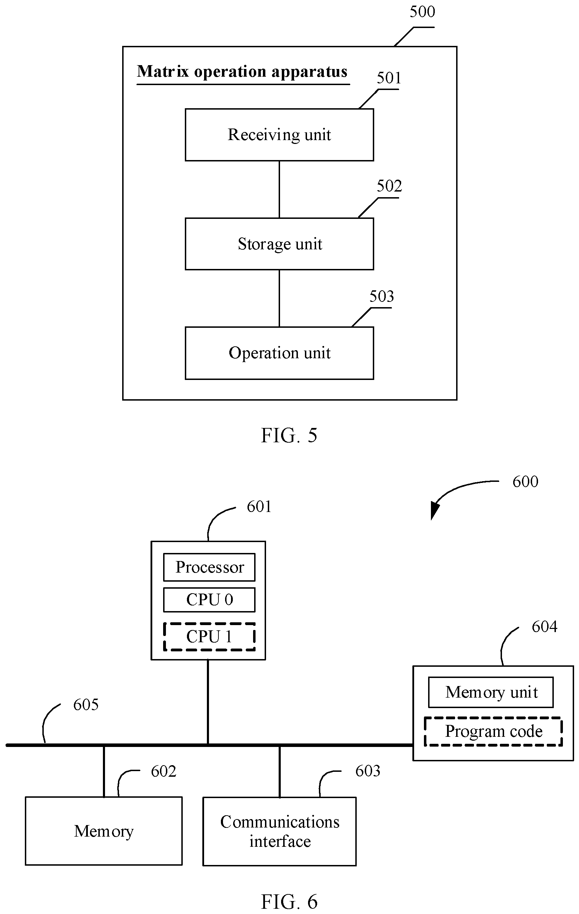

The foregoing describes, in detail with reference to FIG. 1 and FIG. 2, the matrix operation accelerator provided in this application, and describes, in detail with reference to FIG. 3A and FIG. 3B and FIG. 4, the matrix operation method provided in this application. The following describes, with reference to FIG. 5 and FIG. 6, a matrix operation apparatus and device provided in this application.

FIG. 5 is a matrix operation apparatus 500 according to this application. The matrix operation apparatus 500 is applied to a matrix operation accelerator, and the matrix operation apparatus 500 includes a receiving unit 501, a storage unit 502, and an operation unit 503.

The receiving unit 501 is configured to receive a matrix operation instruction, where the matrix operation instruction is used to instruct to perform a matrix operation on a first matrix and a second matrix.

The storage unit 502 is configured to: respectively store subsets of the first matrix and subsets of the second matrix in a first storage space and a second storage space of a memory, and store a third matrix in a third storage space of the memory, where the third matrix is a matrix including subsets obtained by multiplying the subsets of the first matrix by the subsets of the second matrix.

The operation unit 503 is configured to perform matrix operations on the subsets of the first matrix and the subsets of the second matrix based on the matrix operation instruction, to obtain matrix operation results.

Optionally, the operation unit 503 is specifically configured to perform parallel matrix operations on the subsets of the first matrix and the subsets of the second matrix based on the matrix operation instruction, to obtain matrix operation results.

Optionally, the matrix operation apparatus 500 may further include an updating unit.

The updating unit is configured to update subsets of the third matrix in the third storage space based on the matrix operation results, where the subsets of the third matrix are obtained after matrix operations are performed on subsets of the first matrix and subsets of the second matrix.

Optionally, the matrix operation apparatus 500 may further include a partitioning unit.

The partitioning unit partitions the first matrix and the second matrix based on the matrix operation instruction, to obtain a plurality of first subsets of the first matrix and a plurality of second subsets of the second matrix.

Optionally, the matrix operation apparatus 500 may further include a data access unit.

The data access unit is configured to obtain N first subsets of the first matrix and N second subsets of the second matrix from a shared storage space based on a partitioning result, where N is greater than or equal to a quantity of process elements PEs included in the matrix operation accelerator, N is a positive integer, and the shared storage space is a storage space shared by a processor and the matrix operation accelerator.

In this case, the storage unit 502 is specifically configured to: store the N first subsets in the first storage space of the memory, and store the N second subsets in the second storage space of the memory.

Optionally, the data access unit is further configured to: when the matrix operations on the first subsets in the first storage space and the second subsets in the second storage space are completed, and matrix operations on all the subsets of the first matrix and all the subsets of the second matrix are not completed, obtain, from the shared storage space, a first subset that is of the first matrix and that does not participate in the matrix operation, and store, in the first storage space of the memory, the obtained first subset that is of the first matrix and that does not participate in the matrix operation.

Optionally, the data access unit is further configured to: when the matrix operations on the first subsets in the first storage space and the second subsets in the second storage space are completed, and the matrix operations on all the subsets of the first matrix and all the subsets of the second matrix are not completed, obtain, from the shared storage space, a second subset that is of the second matrix and that does not participate in the matrix operation, and store, in the second storage space of the memory, the obtained second subset that is of the second matrix and that does not participate in the matrix operation.

Optionally, the data access unit is further configured to: when matrix operations on all the subsets of the first matrix and all the subsets of the second matrix are completed, extract the third matrix currently stored in the third storage space from the memory, and store the third matrix in the shared storage space, where the third matrix is a matrix obtained by performing the matrix operation on the first matrix and the second matrix.

Optionally, the matrix operation apparatus 500 may further include a sending unit.

The sending unit is configured to send an interrupt instruction to the processor, where the interrupt instruction is used to notify that the matrix operation on the first matrix and the second matrix is completed.

Optionally, the matrix operation accelerator to which the matrix operation apparatus is applied may include a process element PE, and the PE includes a multiplier and an adder, where a first input end and a second input end of the multiplier are respectively connected to the first storage space and the second storage space of the memory, an output end of the multiplier is connected to a first input end of the adder, a second input end of the adder is connected to the third storage space of the memory, and an output end of the adder is connected to the third storage space of the memory. In this case, a process of performing the matrix operation in the PE may include: the multiplier multiplies elements in the subset of the first matrix by elements in the subset of the second matrix; and the adder adds computing results of a plurality of multipliers to elements in current subsets of the third matrix in the third storage space, and updates the elements in the subsets of the third matrix in the third storage space by using addition operation results.

Optionally, the matrix operation accelerator to which the matrix operation apparatus is applied may include a process element PE, and the PE includes a multiplier, an adder, and a register, where a first input end and a second input end of the multiplier are respectively connected to the first storage space and the second storage space of the memory, an output end of the multiplier and an output end of the register are both connected to an input end of the adder, an output end of the adder is connected to an input end of the register, and the output end of the adder is further connected to the third storage space of the memory. In this case, a process of performing the matrix operation in the PE may include: the register stores elements in current subsets of the third matrix in the third storage space; the multiplier multiplies elements in the subset of the first matrix by elements in the subset of the second matrix; and the adder correspondingly adds computing results of a plurality of multipliers to the elements in the current subsets of the third matrix in the third storage space, and updates the elements in the subsets of the third matrix in the third storage space by using addition operation results.

Optionally, a quantity of multipliers included in the PE is related to a scale of the subset of the first matrix and a scale of the subset of the second matrix.

It should be understood that the apparatus 500 in this embodiment of this application may be implemented by using an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, when the matrix operation method shown in FIG. 3A and FIG. 3B may be implemented by using software, the apparatus 500 and modules thereof may be software modules.

The matrix operation apparatus 500 according to this embodiment of this application may correspondingly perform the method described in the embodiments of this application. In addition, the foregoing and other operations and/or functions of the units in the matrix operation apparatus 500 are separately used to implement corresponding procedures of the method in FIG. 3A and FIG. 3B. For brevity, details are not described herein again.

FIG. 6 is a schematic diagram of a matrix operation device 600 according to this application. As shown in the figure, the matrix operation device 600 includes a processor 601, a memory 602, a communications interface 603, and a memory unit 604. The processor 601, the memory 602, the communications interface 603, and the memory unit 604 perform communication by using the bus 605, or may implement communication by using another means such as wireless transmission. The memory 602 is configured to store instructions, and the processor 601 is configured to execute the instructions stored in the memory 602. The memory 602 stores program code, and the processor 601 may invoke the program code stored in the memory 602, to perform the following operations:

receiving a matrix operation instruction, where the matrix operation instruction is used to instruct to perform a matrix operation on a first matrix and a second matrix;

respectively storing subsets of the first matrix and subsets of the second matrix in a first storage space and a second storage space of a memory, and storing a third matrix in a third storage space of the memory, where the third matrix is a matrix including subsets obtained by multiplying the subsets of the first matrix and the subsets of the second matrix; and

performing matrix operations on the subsets of the first matrix and the subsets of the second matrix based on the matrix operation instruction, to obtain matrix operation results.

It should be understood that in the embodiment of this application, the processor 601 may be a CPU, or the processor 601 may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or may be any conventional processor or the like.

The memory 602 may include a read-only memory and a random access memory, and provide instructions and data to the processor 601. The memory 602 may further include a nonvolatile random access memory. For example, the memory 602 may further store information of a device type.

The memory 602 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The bus 605 may further include a power bus, a control bus, a status signal bus, and the like, in addition to a data bus. However, for clear description, various types of buses in the figure are marked as the bus 605.

It should be understood that the matrix operation device 600 according to this embodiment of this application may correspond to the matrix operation apparatus 500 in the embodiments of this application, and may correspond to a corresponding execution body of the method shown in FIG. 3A and FIG. 3B according to the embodiments of this application. In addition, the foregoing and other operations and/or functions of the modules in the matrix operation device 600 are separately used to implement corresponding procedures of the method in FIG. 3A and FIG. 3B. For brevity, details are not described herein.

As another possible embodiment, this application further provides a device. The device includes a processor, a shared storage space, and the foregoing matrix operation accelerator shown in FIG. 1. The processor and the matrix operation accelerator share the shared storage space. The processor is configured to send a matrix operation instruction to the matrix operation accelerator. The matrix operation accelerator is configured to perform the operation steps of the foregoing method shown in FIG. 3A and FIG. 3B on matrices in the shared storage space based on the matrix operation instruction, to implement a matrix operation. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

The foregoing descriptions are merely specific implementations of this application. Any variation or replacement readily figured out by persons skilled in the art based on the specific implementations provided in this application shall fall within the protection scope of this application.

**Claims**

1. A matrix operation accelerator, wherein the accelerator comprises a control CTRL element, a memory, and a process element PE, wherein

   the CTRL element is configured to receive a matrix operation instruction;
   the memory is configured to store subsets of a first matrix in a first storage space, store subsets of a second matrix in a second storage space, and store a third matrix in a third storage space, wherein the third matrix is a matrix comprising subsets obtained by multiplying the subsets of the first matrix by the subsets of the second matrix; and
   the PE is configured to perform matrix operations on the subsets of the first matrix in the first storage space and the subsets of the second matrix in the second storage space based on the matrix operation instruction, to obtain matrix operation results.

2. The accelerator according to claim 1, wherein the accelerator comprises at least one PE.

3. The accelerator according to claim 2, wherein when the at least one PE comprises a plurality of PEs, the plurality of PEs are separately configured to perform parallel matrix operations on the subsets of the first matrix in the first storage space and the subsets of the second matrix in the second storage space based on the matrix operation instruction, to obtain matrix operation results.

4. The accelerator according to any one of claims 1 to 3, wherein
   the PE is further configured to update subsets of the third matrix in the third storage space based on the matrix operation results, wherein the subsets of the third matrix are obtained after matrix operations are performed on the subsets of the first matrix and the subsets of the second matrix.

5. The accelerator according to any one of claims 1 to 4, wherein
   the CTRL element is further configured to partition the first matrix and the second matrix based on the matrix operation instruction, to obtain a plurality of subsets of the first matrix and a plurality of subsets of the second matrix.

6. The accelerator according to claim 5, wherein the accelerator further comprises a direct memory access DMA unit, wherein
   the DMA unit is configured to: obtain N first subsets of the first matrix and N second subsets of the second matrix from a shared storage space based on a partitioning result of the CTRL element, and respectively store the N first subsets and the N second subsets in the first storage space and the second storage space of the memory, wherein N is greater than or equal to a quantity of PEs comprised in the accelerator, N is a positive integer, and the shared storage space is a storage space shared by a processor and the accelerator.

7. The accelerator according to claim 6, wherein
   the DMA unit is further configured to: when the PE completes the matrix operations on the first subsets in the first storage space and the second subsets in the second storage space and does not complete matrix operations on all the subsets of the first matrix and all the subsets of the second matrix, obtain, from the shared storage space, a first subset that is of the first matrix and that does not participate in the matrix operation, and store, in the first storage space of the memory, the obtained first subset that is of the first matrix and that does not participate in the matrix operation.

8. The accelerator according to claim 6 or 7, wherein
   the DMA unit is further configured to: when the PE completes the matrix operations on the first subsets in the first storage space and the second subsets in the second storage space and does not complete matrix operations on all the subsets of the first matrix and all the subsets of the second matrix, obtain, from the shared storage space, a second subset that is of the second matrix and that does not participate in the matrix operation, and store, in the second storage space of the memory, the obtained second subset that is of the second matrix and that does not participate in the matrix operation.

9. The accelerator according to claim 6, wherein
   the DMA unit is further configured to: when the PE completes matrix operations on all the subsets of the first matrix and all the subsets of the second matrix, extract the third matrix currently stored in the third storage space from the memory, and store the third matrix in the shared storage space, wherein the third matrix is a matrix obtained by performing the matrix operation on the first matrix and the second matrix.

10. The accelerator according to claim 9, wherein the CTRL element is further configured to send an interrupt instruction to the processor, wherein the interrupt instruction is used to notify that the matrix operation on the first matrix and the second matrix is completed.

11. The accelerator according to any one of claims 1 to 10, wherein the PE comprises: a multiplier and an adder, wherein a first input end and a second input end of the multiplier are respectively connected to the first storage space and the second storage space of the memory, an output end of the multiplier is connected to a first input end of the adder, a second input end of the adder is connected to the third storage space of the memory, and an output end of the adder is connected to the third storage space of the memory;

the multiplier is configured to multiply elements in the subset of the first matrix by elements in the subset of the second matrix; and
the adder is configured to: add computing results of a plurality of multipliers to elements in current subsets of the third matrix in the third storage space, and update the elements in the subsets of the third matrix in the third storage space by using addition operation results.

12. The accelerator according to any one of claims 1 to 10, wherein the PE comprises: a multiplier, an adder, and a register, wherein a first input end and a second input end of the multiplier are respectively connected to the first storage space and the second storage space of the memory, an output end of the multiplier and an output end of the register are both connected to an input end of the adder, an output end of the adder is connected to an input end of the register, and the output end of the adder is further connected to the third storage space of the memory;

the register is configured to store elements in current subsets of the third matrix in the third storage space;
the multiplier is configured to multiply elements in the subset of the first matrix by elements in the subset of the second matrix; and
the adder is configured to: add computing results of a plurality of multipliers to the elements in the current subsets of the third matrix in the register, and update the elements in the subsets of the third matrix in the third storage space by using addition operation results.

13. The accelerator according to claim 11 or 12, wherein a quantity of multipliers comprised in the PE is related to a scale of the subset of the first matrix and a scale of the subset of the second matrix.

14. A matrix operation method, wherein the method is applied to a matrix operation accelerator, and the method comprises:

receiving a matrix operation instruction, wherein the matrix operation instruction is used to instruct to perform a matrix operation on a first matrix and a second matrix;
respectively storing subsets of the first matrix and subsets of the second matrix in a first storage space and a second storage space of a memory, and storing a third matrix in a third storage space of the memory, wherein the third matrix is a matrix comprising subsets obtained by multiplying the subsets of the first matrix by the subsets of the second matrix; and
performing matrix operations on the subsets of the first matrix and the subsets of the second matrix based on the matrix operation instruction, to obtain matrix operation results.

15. The method according to claim 14, wherein the performing matrix operations on the subsets of the first matrix and the subsets of the second matrix based on the matrix operation instruction comprises:
performing parallel matrix operations on the subsets of the first matrix and the subsets of the second matrix based on the matrix operation instruction.

16. The method according to claim 14 or 15, wherein the method further comprises:
updating subsets of the third matrix in the third storage space based on the matrix operation results, wherein the subsets of the third matrix are obtained after matrix operations are performed on the subsets of the first matrix and the subsets of the second matrix.

17. The method according to any one of claims 14 to 16, wherein the method further comprises:
partitioning the first matrix and the second matrix based on the matrix operation instruction, to obtain a plurality of first subsets of the first matrix and a plurality of second subsets of the second matrix.

18. The method according to claim 17, wherein the method further comprises:

obtaining N first subsets of the first matrix and N second subsets of the second matrix from a shared storage space based on a partitioning result, wherein N is greater than or equal to a quantity of process elements PEs comprised in the matrix operation accelerator, N is a positive integer, and the shared storage space is a storage space shared by a processor and the matrix operation accelerator; and
the respectively storing subsets of the first matrix and subsets of the second matrix in a first storage space and a second storage space of a memory comprises:

> storing the N first subsets in the first storage space of the memory; and
> storing the N second subsets in the second storage space of the memory.

19. The method according to claim 18, wherein when the matrix operations on the first subsets in the first storage space and the second subsets in the second storage space are completed and the matrix operations on all the subsets of the first matrix and all the subsets of the second matrix are not completed, the method further comprises:
obtaining, from the shared storage space, a first subset that is of the first matrix and that does not participate in the matrix operation, and storing, in the first storage space of the memory, the obtained first subset that is of the first matrix and that does not participate in the matrix operation.

20. The method according to claim 18 or 19, wherein when the matrix operations on the first subsets in the first storage space and the second subsets in the second storage space are completed and the matrix operations on all the subsets of the first matrix and all the subsets of the second matrix are not completed, the method further comprises:
obtaining, from the shared storage space, a second subset that is of the second matrix and that does not participate in the matrix operation, and storing, in the second storage space of the memory, the obtained second subset that is of the second matrix and that does not participate in the matrix operation.

21. The method according to claim 18, wherein when matrix operations on all the subsets of the first matrix and all the subsets of the second matrix are completed, the method further comprises:
extracting the third matrix currently stored in the third storage space from the memory, and storing the third matrix in the shared storage space, wherein the third matrix is a matrix obtained by performing the matrix operation on the first matrix and the second matrix.

22. The method according to claim 21, wherein the method further comprises:

sending an interrupt instruction to the processor, wherein the interrupt instruction is used to notify that the matrix operation on the first matrix and the second matrix is completed.

23. The method according to any one of claims 14 to 22, wherein the matrix operation accelerator comprises a process element PE, and the PE comprises a multiplier and an adder, wherein a first input end and a second input end of the multiplier are respectively connected to the first storage space and the second storage space of the memory, an output end of the multiplier is connected to a first input end of the adder, a second input end of the adder is connected to the third storage space of the memory, and an output end of the adder is connected to the third storage space of the memory; and
the multiplier multiplies elements in the subset of the first matrix by elements in the subset of the second matrix; and the adder adds computing results of a plurality of multipliers to elements in current subsets of the third matrix in the third storage space, and updates the elements in the subsets of the third matrix in the third storage space by using addition operation results.

24. The method according to any one of claims 14 to 22, wherein the matrix operation accelerator comprises a process element PE, and the PE comprises a multiplier, an adder, and a register, wherein a first input end and a second input end of the multiplier are respectively connected to the first storage space and the second storage space of the memory, an output end of the multiplier and an output end of the register are both connected to an input end of the adder, an output end of the adder is connected to an input end of the register, and the output end of the adder is further connected to the third storage space of the memory; and
the register stores elements in current subsets of the third matrix in the third storage space; the multiplier multiplies elements in the subset of the first matrix by elements in the subset of the second matrix; and the adder correspondingly adds computing results of a plurality of multipliers to the elements in the current subsets of the third matrix in the third storage space, and updates the elements in the subsets of the third matrix in the third storage space by using addition operation results.

25. The method according to claim 23 or 24, wherein a quantity of multipliers comprised in the PE is related to a scale of the subset of the first matrix and a scale of the subset of the second matrix.

10

## System applicable to a matrix operation

100

### Matrix operation accelerator

120

Memory

131  132  133  134

| Process element PE | Process element PE | Process element PE | Process element PE |

110

Control CTRL element

140

Direct memory access DMA unit

200

**Central processing unit CPU**

400

**Bus**

300

**Main memory (main memory for short)**

FIG. 1

131

120

Process element PE

Memory

Register 2

Adder 4

Register 1

Adder 3

Adder 1

Adder 2

Multiplier 1

Multiplier 2

Multiplier 3

Multiplier 4

$b_{00}$

$b_{10}$

$b_{20}$

$b_{30}$

$a_{00}$

$a_{01}$

$a_{02}$

$a_{03}$

$c_{00}$

$c_{01}$

$c_{02}$

$c_{03}$

FIG. 2

FIG. 3A

CONT. FROM FIG. 3A

S307: Second object

S308: Perform matrix operations on the obtained first objects and the obtained second objects in parallel based on the second command

S308: Third object

CONT. FROM FIG. 3A

CONT. FROM FIG. 3A

S309: Determine whether the matrix operation on the first matrix and the second matrix is completed

No

Yes

S310: Third command

S311: Third matrix

S311: Third matrix

CONT. FROM FIG. 3A

CONT. FROM FIG. 3A

CONT. FROM FIG. 3A

FIG. 3B

**Matrix A**

| $a_{00}$ | $a_{01}$ | $a_{02}$ | $a_{03}$ |
|---|---|---|---|
| $a_{10}$ | $a_{11}$ | $a_{12}$ | $a_{13}$ |
| $a_{20}$ | $a_{21}$ | $a_{22}$ | $a_{23}$ |
| $a_{30}$ | $a_{31}$ | $a_{32}$ | $a_{33}$ |

A0

A1

A2

A3

$\times$

**Matrix B**

| B0 | B1 | B2 | B3 |
|---|---|---|---|

**First storage space**

| A0 | A1 | A2 | A3 |
|---|---|---|---|

**Second storage space**

| B0 | B1 | B2 | B3 |
|---|---|---|---|

| PE | PE | PE | PE |
|---|---|---|---|
| 131 | 132 | 133 | 134 |

**Third storage space**

| **C00** | C01 | C02 | C03 |
|---|---|---|---|
| C10 | **C11** | C12 | C13 |
| C20 | C21 | **C22** | C23 |
| C30 | C31 | C32 | **C33** |

FIG. 4

FIG. 5

FIG. 6

## INTERNATIONAL SEARCH REPORT

| International application No. |
|---|
| **PCT/CN2021/099891** |

**A.    CLASSIFICATION OF SUBJECT MATTER**

G06F 17/16(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, ISI, CNKI: 矩阵, 运算, 计算, 乘法, 加法, 相加, 分块, 划分, 子, 存储, 缓存, 寄存, matrix, multiply, add, divide, block, sub, child, buffer, DMA

**C.    DOCUMENTS CONSIDERED TO BE RELEVANT**

| Category* | Citation of document, with indication, where appropriate, of the relevant passages | Relevant to claim No. |
|---|---|---|
| X | CN 109992743 A (HUAWEI TECHNOLOGIES CO., LTD.) 09 July 2019 (2019-07-09) description [0019], [0069]-[0119], [0124]-[0125], figures 5-17 | 1-25 |
| X | CN 104636316 A (NATIONAL UNIVERSITY OF DEFENSE TECHNOLOGY, PLA.) 20 May 2015 (2015-05-20) description, paragraphs [0037]-[0060], and figures 1-6 | 1-25 |
| A | CN 104899182 A (NATIONAL UNIVERSITY OF DEFENSE TECHNOLOGY, PLA.) 09 September 2015 (2015-09-09) entire document | 1-25 |
| A | CN 106445471 A (BEIJING BAIDU NETCOM SCIENCE AND TECHNOLOGY CO., LTD.) 22 February 2017 (2017-02-22) entire document | 1-25 |
| A | US 2020201642 A1 (KALRAY) 25 June 2020 (2020-06-25) entire document | 1-25 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 August 2021** | **30 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/099891**

| Patent document cited in search report | | | Publication date (day/month/year) | Patent family member(s) | | | Publication date (day/month/year) |
|---|---|---|---|---|---|---|---|
| CN | 109992743 | A | 09 July 2019 | KR | 20200098684 | A | 20 August 2020 |
| | | | | JP | 2021508125 | A | 25 February 2021 |
| | | | | WO | 2019128404 | A1 | 04 July 2019 |
| | | | | EP | 3726399 | A1 | 21 October 2020 |
| | | | | CN | 111859273 | A | 30 October 2020 |
| | | | | CN | 109992743 | B | 16 June 2020 |
| | | | | US | 2020334322 | A1 | 22 October 2020 |
| CN | 104636316 | A | 20 May 2015 | CN | 104636316 | B | 12 January 2018 |
| CN | 104899182 | A | 09 September 2015 | CN | 104899182 | B | 31 October 2017 |
| CN | 106445471 | A | 22 February 2017 | US | 10140251 | B2 | 27 November 2018 |
| | | | | US | 2018107630 | A1 | 19 April 2018 |
| | | | | CN | 106445471 | B | 01 June 2018 |
| US | 2020201642 | A1 | 25 June 2020 | FR | 3090932 | A1 | 26 June 2020 |
| | | | | EP | 3671488 | A1 | 24 June 2020 |
| | | | | CN | 111353126 | A | 30 June 2020 |

Form PCT/ISA/210 (patent family annex) (January 2015)